Europäisches Patentamt

European Patent Office

Office européen des brevets

(19)

(11) Publication number: **0 178 045**
A1

(12) # EUROPEAN PATENT APPLICATION

(21) Application number: **85305385.8**

(22) Date of filing: **29.07.85**

(51) Int. Cl.⁴: **G 02 F 1/11,** G 02 B 6/14

(30) Priority: **31.08.84 US 646286**

(43) Date of publication of application: **16.04.86**
**Bulletin 86/16**

(84) Designated Contracting States: **AT BE CH DE FR GB IT
LI LU NL SE**

(71) Applicant: **Litton Systems, Inc., 360 North Crescent
Drive, Beverly Hills California 90210 (US)**

(72) Inventor: **Laznicka, Oldrich M. Jr., 5908 Carell Avenue,
Agoura Hills California 91301 (US)**
Inventor: **Chang, Chin-Lung, 1944 West Thunderbird
Road, Phoenix Arizona 85023 (US)**

(74) Representative: **Rushton, Ronald et al, SOMMERVILLE
& RUSHTON 11 Holywell Hill, St. Albans Hertfordshire
AL1 1EZ (GB)**

(54) Acoustooptic method and apparatus for phase modulation.

(57) An acoustooptic device (10, 48) for modulating the phase of
light travelling in an optical fiber (20, 22). A piezoelectric trans-
ducer (26, 28, 30) is mounted adjacent the fiber cladding (22)
such that vibration of the transducer (26, 28, 30) will launch a
phase-modulating bulk acoustic wave toward the core (20) of the
fiber (12, 12a). The acoustic impedances of the transducers (26,
28, 30) and the fiber (20, 22) are matched to optimize transfer of
wave energy and phase control. A plurality of transducers (60, 62,
64, 66, 68, 70, 72, 74, 76, 78, 80, 82, 84) regularly spaced by one
beat length and driven by a three-phase sinusoid, from a fre-
quency shifter (59).

1

# ACOUSTOOPTIC METHOD AND APPARATUS
# FOR PHASE MODULATION
## Background of the Invention

The present invention relates to optical communication and sensor systems. More particularly, this invention pertains to a method and apparatus for modulating the phase of optical energy transmitted by an optical fiber.

A phase modulator is an essential component of a communciations or sensor system in which information is transmitted by means of electromagnetic waves. A phase modulator permits the addition of detectable phase shifts onto an electromagnetic carrier signal. The phase shifts can be decoded at a receiver and the detected information extracted therefrom.

Electromagnetic waves have frequency-dependent characteristics. Thus, visible light, infrared, microwave and millimeter wave energy represent differing physical manifestations of the electromagnetic phenomenon. As a result of frequency characteristics, methods and means for effecting preselected changes in the phase of an electromagnetic wave depend upon the frequency therof.

A very promising communication and sensor technology relies upon the transmission of appropriately-modulated light energy through optical fibers. This fiber optic technology offers the possibility of secure transmissions at bandwidths and frequencies well beyond those previously achieved by other electromagnetic systems.

In the past, attempts to develop a phase modulator for use in a fiber optic sensor system have relied upon electromechanical systems that impose forces upon the optical fiber to alter its refractive indices. Essentially, such mechanical forces stress the fiber in a preselected manner. The stress effects a desired phase change by means of the photoelastic properties of the fiber material.

Examples of electromechanical methods for modulating the phase of optical energy travelling through an optical fiber include devices of the type known as "squeezers" and "stretchers". As their names imply, these devices impart differing types of physical

2

stresses upon the optical fiber. In a squeezer, plates of deformable material such as PZT, a piezoelectric ceramic compound, are positioned on either side of the fiber. The jacket is removed from the fiber, exposing its cladding directly to pressure from the PZT plates. The PZT material, a ceramic that deforms in response to an applied voltage, is arranged so that, in response to a predetermined electrical signal, force is applied to the optical fiber in a direction transverse to its optical axis. This force causes the core of the optical fiber to become more condensed, thereby increasing the index of refraction of its energy transmitting portion. As a result, the propagation constant of light within the fiber is changed in the vicinity of the squeezer, and the phase of such light is altered in a predetermined manner. Mathematically, the phase shift $\Delta\phi$ effected by a squeezer is governed predominantly by the following relationship:

$$\Delta\phi = 2\pi\Delta nL/\lambda, \tag{1}$$

where:

    $\lambda$ = wavelength of light source;

    $\Delta n$ = change in index of refraction of core of fiber; and

    $L$ = length of fiber

    In a stretcher, the optical fiber is wound around a cylinder of piezoelectric material having metal-coated inner and outer surfaces that act as electrodes. Proper application of voltage to the radially-poled piezoelectric material causes controllable expansions and contractions of the circumference of the cylinder. As a result, the length of the optical fiber wound about the surface of the cylinder is altered to make preselected phase changes of the light travelling through the optical fiber. The relationship that describes the shift in the phase of light travelling through an optical fiber in the vicinity of a stretcher is:

$$\Delta\phi = 2\pi n\Delta L/\lambda, \tag{2}$$

where:

    $n$ = index of refraction of core of fiber; and

    $\Delta L$ = change in length of fiber.

    The stretcher compresses the core of the fiber and therefore changes its refractive indices, which changes the phase of the light. However, the phase change produced by the of altering the path length predominates over the phase change due to the increased core density.

The devices described above, by mechanically stressing the optical fiber, can produce irreversible and undesired permanent structural alteration. In addition, these electromechanical devices have frequency ranges limited by the mechanical response time of the driving piezoelectric material, rendering each practical only as a low frequency (less than 5 Megahertz) device. Bandwidth restrictions severely limit the range of practical application of a modulator. Communications system bandwidths define the information content of transmissions. High operating frequencies enhance sensor accuracy by minimizing the effect of low frequency environmental noise.

## Summary of the Invention

The present invention overcomes the disadvantages of the prior art by providing apparatus for modulating the phase of light as it propagates along an optical fiber. The apparatus includes means for generating a bulk acoustic wave and means for launching the acoustic wave into a selected portion of the optical fiber.

The invention further provides a method for modulating the phase of light propagated by an optical fiber. The method includes the steps of generating an acoustic wave and launching the acoustic wave into the fiber so that the wave interacts with light guided by the fiber.

The phase modulator may be utilized as an essential component of an optical frequency shifter. The invention includes means for generating acoustic waves and means for launching the waves into selected portions of an optical fiber.

The features and advantages of the invention will become further apparent from the detailed description that follows. This description is in conjunction with and relates to an accompanying set of drawing figures that illustrate the invention. In the description and in the drawings numerals are associated with various features of

0178045

4

the invention, like numerals of the drawing figures and the detailed description referring to like features of the invention throughout.

Brief Description of the Drawings

Figure 1 is an isometric view of a phase modulator in accordance with the invention;

Figure 2 is a cross sectional view of the phase modulator taken along line 2-2 of Figure 1;

Figure 3 is a cross sectional view of the phase modulator taken along line 3-3 of Figure 1;

Figure 4 is a partially broken isometric view of an alternative embodiment of a phase modulator according to the present invention; and

Figure 5 illustrates a frequency shifter formed of a plurality of phase modulators according to Figure 4.

Description of the Preferred Embodiment

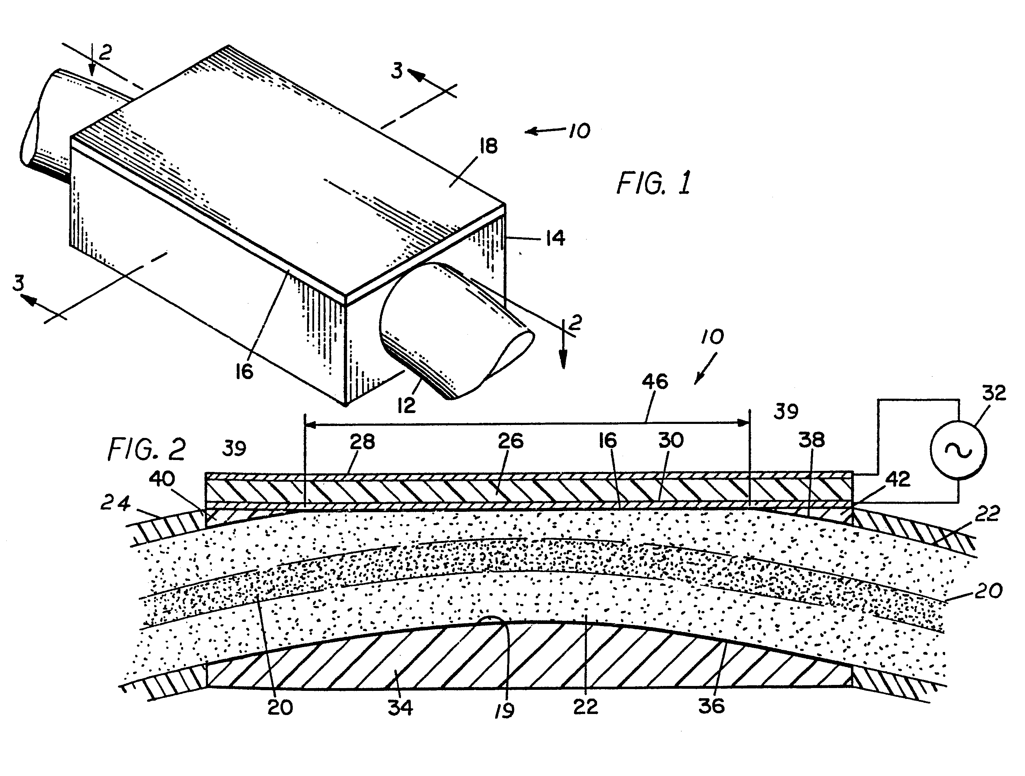

Figure 1 is an isometric view of a phase modulator 10 in accordance with the invention. From Figure 1 one may gain an appreciation of the exterior geometry of one of the two preferred embodiments of the device illustrated therein.

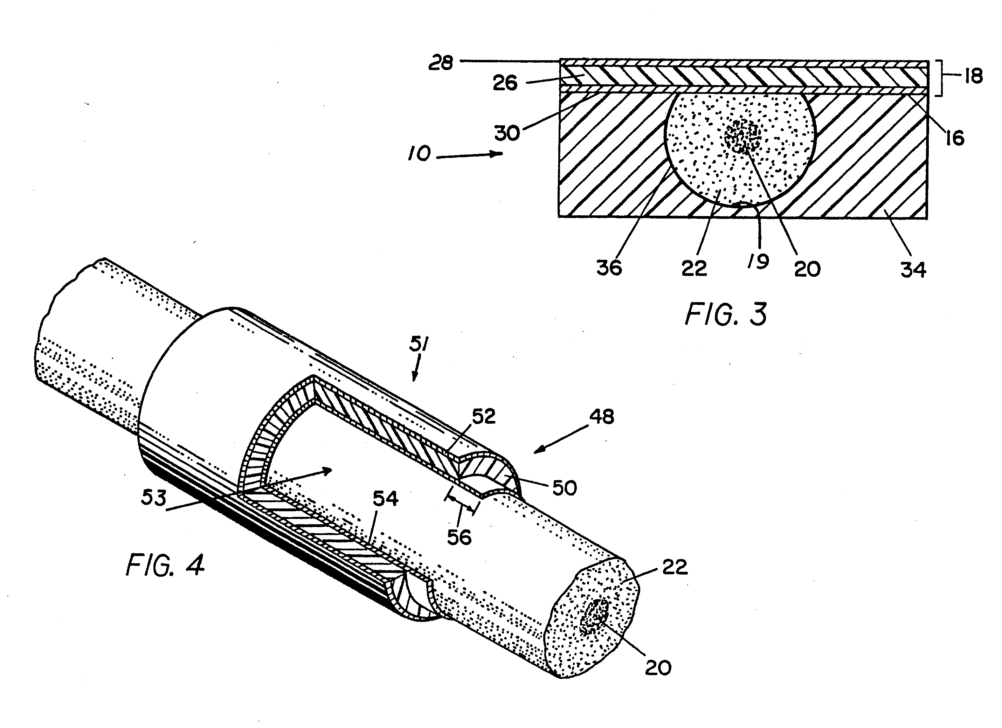

The modulator 10 generally includes a block 14 of quartz or other appropriate mechanically and optically inert material. A substantially planar transducer 18 is fixed to the upper surface of the block 14 by means of a layer 16 of epoxy resin or other appropriate adhesive. An optical fiber 12 is fixed within an arcuate channel 19, shown in Figures 2 and 3, within the block 14. The fiber 12 may comprise a doped core and surrounding cladding of fused silica or the like enclosed within a protective plastic jacket. Details of the fiber 12, not shown Figure 1, will become apparent subsequently. The arcuate channel 19 through which the optical fiber 12 passes includes an aperture in the upper surface of the block 14, allowing the fixation of a portion of the fiber 12 in abutment with the tranducer 18.

Figures 2 and 3 are side and front cross sectional views of the modulator 10 taken along the section lines 2-2 and 3-3, respectively, of Figure 1. The arcuate channel 19 for the optical fiber is best shown in Figure 2. The fiber 12 comprises an appropriately doped core 12 surrounded by a cladding 22. As is well known in the art, the relationship between the differing refractive indices of the core 20 and cladding 22 confines light guided by the fiber 12 substantially within the core 22 with minimal losses. Outside the block 14 a jacket 24 of appropriate material, including either metal or plastic, surrounds the optical fiber 12 to provide environmental protection and further minimize losses. The teachings of the present invention are equally applicable to optical fibers of both isotropic and anisotropic (e.g. birefringent) optical character.

The transducer 18 is preferably formed of a layer of piezoelectric material 26 sandwiched between an upper electrode 28 and a lower electrode 30 of appropriate conductive material such as aluminum. A preferred piezoelectric material for use in the modulator 10 is lithium niobate.

The piezoelectric layer 26 generates an acoustic wave that propagates in a direction orthogonal to the planar surface of the transducer 16 upon application of a voltage of alternating polarity from a source 32. The material of the layer 26 may be poled for vibration either orthogonal to or collinear with the fiber 12 to generate longitudinal or shear modes of acoustic wave energy.

As will be discussed in detail subsequently, vibration of the layer 26 generates an acoustic wave that propagates in a direction perpendicular to the optical axis of the fiber 12. As is well known, the wavelength of the center frequency of this bulk acoustic wave is equal to one-half the thickness of the layer 26. The electrodes 28 and 30 may be formed to thicknesses appropriate to the practice of this invention by a vacuum deposition or like thin film technique.

In cross-section, the arcuate channel 19 within the block 14 is defined by a convex-shaped bottom edge 34 and a discontinuous edge including concave wedges 40 and 42. Lower and upper edges 36 and 38 of a continuous layer 39 of epoxy or other appropriate adhesive that encircles the fiber 12 (stripped of the jacket 24) are seen in Figure 1 to be interposed between the fiber and the lower and upper surfaces, respectively, of the arcuate channel 19. The adhesive layer 39 fixes the fiber 12 within the block 14.

The fiber 12 includes a substantially flattened portion that forms an interaction region 46 at the upper surface of the cladding 22. The interaction region 46 is preferably prepared by polishing the fiber 12 to remove a portion of the cladding 22 therefrom with an appropriate lapping compound. The interaction region 46 is fixed to the planar lower electrode 30 by an adhesive layer 49 that may be any suitable adhesive such as epoxy resin. The flattened portion 46 provides a region of interaction between the transducer 18 and the fiber 12 for launching a bulk acoustic wave into the core 22. As a general guide, a fiber 12 having an outer cladding diameter of 125 micrometers at a radius of curvature of about 20 centimeters may be polished to a maximum depth of approximately 10 micrometers in forming a the interaction region 46 to be have a length of about 18-20 cm.

Light from a source, such as a laser (not shown), is transmitted through the fiber 12 in an optical path defined by the core 20. The differing indices of refraction of the core 20 and cladding 22 confine the travelling optical energy to the core. The core index is greater than the cladding index, and light propagated by the core 20 impinges upon the core/cladding interface at an angle less than the critical angle for total internal reflection. Therefore, essentially all of the light guided by the fiber 12 remains in the core 20 by internal reflection at the core clading interface. As this light passes through the portion of the fiber 12 within the block 14, and particularly that portion adjacent the interaction region 46, the light interacts with the bulk acoustic wave that is launched by vibration of the piezoelectric transducer 18 in response to the voltage of varying polarity applied to the electrodes 28 and 30 at either side of the piezoelectric layer 26.

The size and materials of the lower electrode 30, adhesive layer 49 and the piezoelectric layer 26 are selected so that their combined acoustic impedance matches the acoustic impedance of the portion of the fiber 12 opposite the interaction region 46. Matching the acoustic impedances assures that maximum acoustic energy is transmitted to the core 20 of the fiber 12 in response to the energy applied to the phase modulation system 10. A preferred embodiment has a layer of piezoelectric material 26, such as crystalline lithium niobate ($LiNbO_3$), with a thickness on the order of 100 microns and has aluminum electrodes having thicknesses on the order of 2000 angstroms.

Thus, the acoustic impedance of the layer 26 may predominate the design of the device, and the relative dimensions of Figures 2 and 3 are accordingly somewhat distorted for clarity of illustration. The invention is, however, intended to encompass a full range of variations in the relative structural makeup of the modulator 10 as defined by the claims that accompany this description.

As is well known in the art, the interaction of the propagating acoustic wave with the optical energy guided by the fiber 12 causes a predictable resultant phase shaft in the transmitted optical energy. This phase shift results from the well known acousto-optic effect that rearranges the dipole moments within the material of the fiber core 20 without physically stressing the material. The magnitude of this phase shift is a primary function of the power applied to the system by means of the source 32 and the length of interaction region 46.

The phase shift is effected in accordance with Equation (1). The acoustic wave launched by the transducer 18 effects a predetermined change, $\Delta n$, in the index of refraction of the fiber medium. This change in the index of refraction is a direct function of the amplitude of an acoustic strain wave generated within the fiber 12. The magnitude of this amplitude, A, is:

$$A = [2PV^3]^{1/2} [d]^{-1/2}, \qquad (3)$$

where:

P = acoustic wave power;

V = velocity of acoustic wave in fiber medium; and

d = density of fiber.

The acoustic wave power, P, is a function of the system power input by source 32. Since there is a small amount of insertion loss the acoustic wave power is somewhat less than the power input. The insertion loss represents the energy conversion efficiency of this portion of the process. The overall efficiency of phase modulation in accordance with the process and apparatus of this invention, measured as the quotient of the induced phase shift, $\Delta\phi$, divided by the power input for driving the source 32, is significantly higher than that available by means of the electro-mechanical systems and methods described previously. The electro-mechanical systems are inherently constrained by the mechanical properties of the apparatus.

Figure 4 is a partially broken isometric view of an alternative phase modulator 48 that operates in accordance with the acousto-optic principles of the previously described. However, as will become evident, the phase modulator 48 of Figure 4 is characterized by a simplified design that enhances the acoustic power density at the fiber core. The phase modulator 48 comprises a generally cylindrical design adapted to accommodate a jacketless interaction region 53 of the optical fiber 12a that comprises only the core 20 and the cladding 22.

A piezoelectric transducer 51, corresponding to the planar transducer 18, is fixed to and encircles a preselected portion of the cladding 22. The transducer 51 includes an outer electrode 52, inner electrode 54 and elongated cylindrical section 50 of piezoelectric material. The inner electrode 52 includes a relatively short cylindrical overhang 56 that provides a convenient location for a pad (not shown) for facilitating electrical contact between the inner electrode 52 and a voltage source (not shown). No region corresponding to the overhang 56 is required with respect to the easily-accessible outer electrode 54.

The phase modulator 48 offers the advantages of reduced cost and enhanced efficiency. The phase modulator 48 may be fabricated by first removing the protective jacket to expose the cladding 22 of the optical fiber. The inner electrode, including overhang 56, is then deposited onto the cladding 2 by vacuum deposition or the like. The cylindrical section 50 is preferably fabricated from one of a number of gels which, when dried and processed generally as described below, form a piezoelectric ceramic layer. The gel form, a rigid porous dispersion of particles 10-1000 Angstroms in size containing $10^3$ - $10^6$ atoms each, allows the manufacture of an infinite number of layer geometries, including the presently described cylindrical form. Gels for forming the section 50 include a number of members of the "Sol Gel" family. Sol Gels include silica gels that contain one or more metal - organic compounds, alcohol as solvent and an appropriate

9

catalyst for regulating the porosity and hardness of the dried film. An appropriate Sol Gel for use in the phase modulator 48 includes $SiO_2$ and $Pb(Zr_xTi_{1-x})O_3$. The porous, solid dielectric film layer for the section 50 is formed adjacent the inner metal electrode 54 by a dip coating process.

The optical fiber is dipped a number of times into the viscous Sol Gel solution. The thickness of each coating is controlled by conventional spinner and slow pull techniques. After an appropriate total wet thickness is achieved, the coating is baked, removing its liquid content and providing a ceramic film of good quality. Unlike the relatively expensive crystalline $NiO_3$ of the planar transducer 18, the structure and high volatility of the liquid phase of the gel compound permits formation of a cylindrical layer of solid material at temperatures well below the melting point of the optical fiber. The outer electrode 52 is then vacuum deposited on the layer 50.

The fiber, including solid dielectric film, is next immersed in a bath of hot silicon oil. A high voltage is applied between the electrodes 52 and 54 to align the dipoles of the cylindrical section 50 so that the piezoelectric material is poled for symmetrical inward and outward radial vibration. A source of alternating current (not shown) is electrically connected between the electrodes 52 and 54 of the transducer 51.

The cylindrical transducer 51 is formed by the combination of electrodes 52, 54. Cylindrical section 50 is caused to vibrate inwardly and outwardly at a preselected frequency in response to the oscillatory signal from the source, generating a bulk acoustic wave. The bulk acoustic wave is launched into the optical fiber 12a, causing an acoustic strain wave to propagate in a direction perpendicular to the direction of propagation of optical energy along the optical fiber 12a. The wavefronts of this acoustic wave are radially directed, forming a series of circles concentric with the optical fiber 12a. The diameter of each propagating strain wave front decreases montonically with time.

The acoustic efficiency of the phase modulator 48 is enhanced over that of the planar device 10 in two structural senses. First, the interaction region of the fiber 12a and transducer 51 extends the entire length of the cylindrical section 50. No appreciable separation exists between the cladding 22 and the transducer 51 throughout this length. Thus, the entire cylindrical transducer 51 launches the acoustic wave into the fiber 12a.

Moreover, as the waves of acoustic energy converge at the core 20, acoustic energy dissipation that occurs in the prior embodiment after the modulating acoustic wavefront passes by the core 20 is avoided. Rather, the acoustic wave energy is effectively reflected off the acoustic wave launching surface in the phase modulator 48. Therefore, by appropriate selection of the frequency applied to the cylindrical transducer 51, in combination with the size and acoustic impedance of the optical fiber 12a that is, in effect, a resonant cavity, it is possible to assure that the reflected energy reinforces the energy content of the newly-launched modulating wavefronts.

The controlled vibration of the piezoelectric transducer of the present invention adjacent the optical fiber serves to launch an appropriate acoustic wave into the fiber. This effect upon the fiber is unlike that which results from the induced movements of the plates of piezoelectric material forming a squeezer (not shown). Thus, whereas a squeezer electrooptically produces a phase shift by fiber deformation, the present invention produces a phase shift by an acousto-optical process.

The distinction between the effects induced derives from the thinness and, hence, lack of bulk, of the piezoelectric transducer of the invention relative to the plates of piezoelectric material of a squeezer. While the plates of a squeezer normally fall within the millimeter to centimeter range, the thickness of the thin film piezoelectric transducer of the phase shifter of the invention is in the micron range (preferably less than 10 microns), approximately three orders of magnitude thinner. As an incident of this significant difference, the vibratory movement of the piezoelectric transducer of the invention adjacent the optical fiber does not measurably compress the core of the fiber; rather, while a portion of the energy input to the phase shifter is absorbed by the capacitive piezoelecric material, a frequency dependent amount is converted into acoustic wave energy. This process does not occur within a squeezer. Rather, substantially all of the energy supplied to the squeezer is stored within the dielectric squeezer plates that then perform the work that alters the index of refraction at the fiber core.

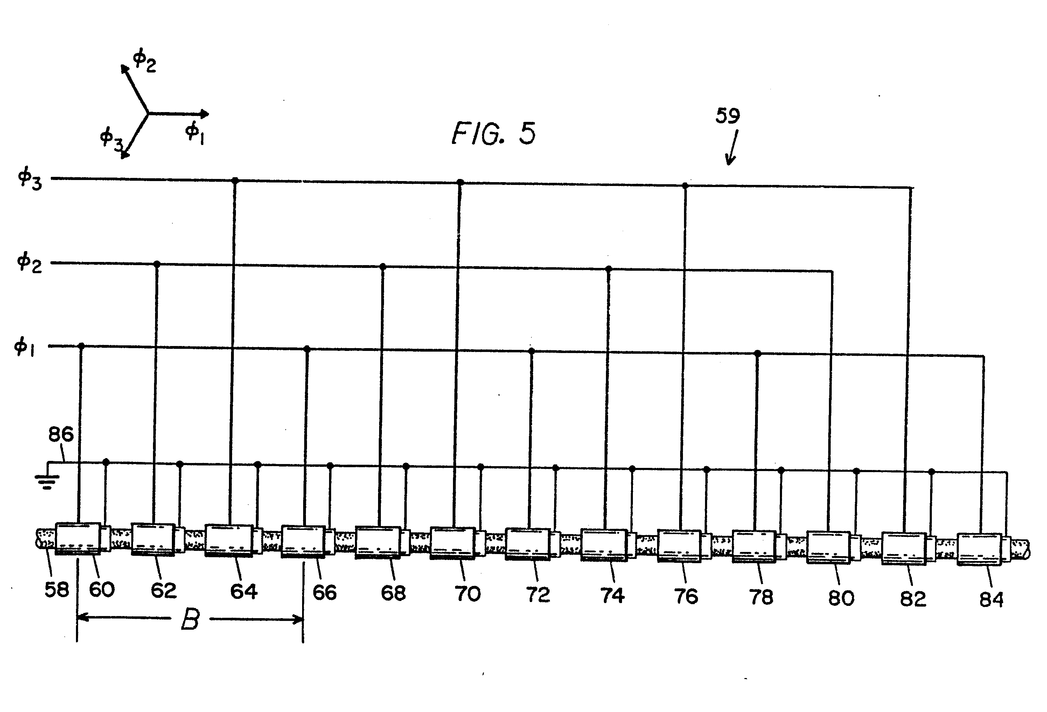

Figure 5 is a partially schematic view of a single sideband frequency shifter 59 that includes a plurality of acoustooptic phase shifters in accordance with the invention. The frequency shifter 59 possesses the advantages of an individual phase shifter of the invention as disclosed above and offers additional advantages, including a simplified configuration, construction and enhanced efficiency, over prior art frequency shifters.

The frequency shifter 59 of an all-fiber device includes for purposes of illustration only, thirteen phase shifters 60, 62, 64, 66, 68, 70, 72, 74, 76, 78, 80, 82 and 84 that encircle a birefringent optical fiber 58. The outer jacket has been stripped from the fiber 58 and each phase shifter is of the generally-cylindrical configuration shown in Figure 4. The inner electrodes of the phase shifters are connected to a common ground bus 86.

The outer electrodes of the phase shifters are electrically driven by a three phase power supply (not shown) which provides the phase voltages $\phi_1$, $\phi_2$ and $\phi_3$. As shown, these driving sinusoidal voltage waveforms, separated in phase by 120 degrees, drive the phase shifters spaced along the birefringent fiber 58. In terms of the driving voltages, the phase shifters are grouped into "cells" of three. Moving along the fiber 58, it is seen that the first phase shifter of each cell is driven by a common sinusoidal waveform $\phi_1$, the second phase shifter by a second common waveforem $\phi_2$ that is 120 degrees ahead of the first common voltage waveform and the third phase shifter by a third common voltage waveform $\phi_3$ that is yet another 120 degrees ahead of the second common voltage waveform. The phase shifters are evenly spaced along the fiber 58 with the separation distance B between in-phase phase shifters being equal to one beat length. As is well known, the beat length of a birefringent fiber is equal to the free space wavelength $\lambda_0$ of light propagating within the fiber divided by the birefringence $\Delta n$ of the fiber. The birefringence is further specified as the difference in the indices of

12

refraction for light of orthogonal polarization directions travelling through the birefringent fiber.

In acccordance with well-known optical theory, an arrangement of phase shifters configured as above will effect a predetermined shift in the frequency of the optical transmission by inducing a travelling acoustic wave within the core of the birefringent fiber 58. As in the case of the phase response of the optical transmission, the magnitude of the frequency shift is proportional to the peak value of the three phase voltage that drives the plurality of phase modulators forming the frequency shifter. As will be further appreciated, the signal, after passing through the frequency shifter region of the fiber, is shifted up in frequency by the frequency of the induced travelling acoustic wave. The phasing of the driving voltages eliminates undesired harmonics from the output, leaving a single sideband. Such single sideband frequency modulation is a generally desirable feature for a frequency shifter and is particularly advantageous in the design of advanced rotation sensor systems. Further, the in-line configuration of the all fiber device assures that transmission signal losses are minimized, an additional goal of any sensor or communication system design.

Thus it is seen that this invention provides an improved apparatus and method for modulating the phase of optical energy travelling within an optical fiber. The modulator, which relies upon acousto-optical principles of operation, avoids the inherent shortcomings of prior art techniques that rely upon mechanical and material capabilities. Further, the device is easily fabricated and provides an essential component for a highly advantageous frequency shifter.

While this invention has been described with reference to its presently preferred embodiments, it is not limited thereto. Rather, the scope of the invention is defined by the following set of claims and equivalents thereof.

WHAT IS CLAIMED IS:

1. Apparatus for modulating the phase of light guided by an optical fiber characterised means for generating an acoustic wave; and means for launching the acoustic wave into a preselected portion of the fiber.

2. Apparatus as defined in Claim 1 wherein the means for generating an acoustic wave includes a piezoelectric element; and means for inducing the vibration of the piezoelectric element.

3. Apparatus as defined in Claim 2 wherein the means for inducing the vibration of the piezoelectric element includes a first electrode adacent a first surface of the piezoelectric element and the optical fiber; a second electrode adjacent the opposed surface of the element; and a source of voltage of alternating polarity having preselected frequency connected to each of the electrodes.

4. Apparatus is defined in Claim 3 wherein the first electrode, the second electrode and the piezoelectric element form a substantially planar transducer.

5. Apparatus as defined in Claim 4 further characterized in that the optical fiber includes a flattened portion adjacent the first electrode.

6. Apparatus as defined in Claim 5 wherein the combined acoustic impedance of the piezoelectric element, the first electrode match the acoustic impedance of the optical fiber.

7. Apparatus as defined in Claim 3 wherein the first electrode, the second electrode and the piezoelectric element form a substantially cylindrical transducer.

8. A method for modulating the phase of light guided by an optical fiber characterised by the steps of generating an acoustic wave of preselected frequency; and launching the acoustic wave so that it interacts with the light.

9. A method as defined in Claim 8 wherein the step of generating an energy wave is further characterized by the steps of

14

connecting a transducer adjacent the fiber; and driving the transducer at a preselected frequency.

10. A method as defined in Claim 9 wherein the transducer includes a piezoelectric element.

11. A method as defined in Claim 10 wherein the piezoelectric element comprises a substantially planar crystalline element.

12. A method as defined in Claim 10 wherein the piezoelectric element is substantially cylindrical.

13. A method as defined in Claim 12 wherein the piezoelectric element is a thin film ceramic.

14. A frequency shifter for modulating the frequency of light guided by a birefringent optical fiber characterised by means for generating a travelling acoustic wave; and means for launching the travelling acoustic wave into a preselected portion of the fiber.

15. A frequency shifter as defined in Claim 14 wherein the means for inducing a travelling acoustic wave includes a plurality of piezoelectric elements spaced along the fiber; and means for inducing out-of-phase vibration of each of the piezoelectric elements.

16. A frequency shifter as defined in Claim 15 wherein each of the means for inducing out of phase vibration further includes a first electrode adjacent a first surface of the element and the optical fiber; a second electrode adjacent the opposed surface of the element; and a source of voltage of alternating polarity having preselected frequency connected to each of the electrodes.

17. A frequency shifter as defined in Claim 16 wherein the first electrode, the second electrode and the piezoelectric element form a substantially cylindrical transducer.

18. A frequency shifter as defined in Claim 17 further characterized in that each of the piezoelectric elements is spaced one beat length from the adjacent piezoelectric element; and adjacent piezoelectric elements are vibrated 120 degrees out ofphase.

FIG. 1

FIG. 2

FIG. 3

FIG. 4

FIG. 5

| DOCUMENTS CONSIDERED TO BE RELEVANT | | | EP 85305385.8 | |

| Category | Citation of document with indication, where appropriate, of relevant passages | Relevant to claim | CLASSIFICATION OF THE APPLICATION (Int. Cl.4) |
|---|---|---|---|
| X | <u>DE - A1 - 3 018 751</u> (LICENTIA)  \* Fig. 2,4; page 11, lines 13-21 \* | 1-3,8- 10,14 | G 02 F 1/11  G 02 B 6/14 |
| A | | 6,7,12, 15-17 | |
| | -- | | |
| X | <u>DE - A1 - 3 013 335</u> (LICENTIA)  \* Fig. 1-3 \* | 1,2,8- 10,14 | |
| A | | 3,4,6, 11 | |
| | -- | | |
| X | <u>DE - A1 - 3 114 175</u> (CHEVRON)  \* Fig. 7-11; page 24, line 7 - page 25, line 19; page 32, lines 3-17 \* | 1-5,8- 11,14 | |
| | -- | | TECHNICAL FIELDS SEARCHED (Int. Cl.4) |
| X | IBM TECHNICAL DISCLOSURE BULLETIN, vol. 21, no. 5, October 1978  F. GFELLER, H.R. MUELLER, "Modulator and Tap for Optical Fiber Systems"  \* Totality \* | 1,2,8 | G 02 F 1/00  G 02 F 2/00  G 02 B 6/00 |
| A | | 7,9,10, 14,15 | |
| | -- | | |
| A | <u>DE - A1 - 3 006 102</u> (RICOH)  \* Page 10, lines 2-6; page 14, lines 7-24 \* | 1,2,4, 8-10,13 | |
| | -- | | |
| A | <u>GB - A - 2 113 417</u> (STANDARD)  \* Totality; especially fig. 5,7 \* | | |
| | ---- | | |

The present search report has been drawn up for all claims

| Place of search | Date of completion of the search | Examiner |
|---|---|---|
| VIENNA | 22-11-1985 | GRONAU |